(19)

Europäisches
Patentamt
European
Patent Office
Office européen
des brevets

(11) **EP 2 418 896 B1**

(12) **EUROPEAN PATENT SPECIFICATION**

(45) Date of publication and mention
of the grant of the patent:
**13.03.2013 Bulletin 2013/11**

(51) Int Cl.:
*H04W 52/44* *(2009.01)*    *H04W 52/42* *(2009.01)*
*H04W 52/48* *(2009.01)*    *H04W 52/32* *(2009.01)*

(21) Application number: **10360033.4**

(22) Date of filing: **09.08.2010**

(54) **Transmission power control in a multi-carrier wireless communication system**

Übertragungsleistungssteuerung in einem drahtlosen Mehrträger-Kommunikationssystem

Commande de la puissance de transmission dans un système de communication sans fil multi-porteuses

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**15.02.2012 Bulletin 2012/07**

(73) Proprietor: **Alcatel Lucent**
**75007 Paris (FR)**

(72) Inventor: **Wong, Shin Horng**
**Chippenham**
**Wiltshire, SN14 0SP (GB)**

(74) Representative: **Sarup, David Alexander**
**Alcatel-Lucent Telecom Limited**
**Unit 18, Core 3, Workzone**
**Innova Business Park**
**Electric Avenue**
**Enfield**
**EN3 7XU (GB)**

(56) References cited:
**WO-A1-2010/051520    WO-A1-2010/088329**

**Description**

FIELD OF THE INVENTION

The present invention relates to a method of evaluating transmission power for transmission of a message between a first network node and a second network node in a multicarrier wireless communications system, network nodes and a computer program product.

BACKGROUND

Single carrier wireless telecommunications systems are known. In those known systems, radio coverage is provided to user equipment, for example, mobile telephones, by geographical area. A base station is located in each geographical area to provide the required radio coverage. User equipment in the area served by a base station receives information and data from the base station and transmits information and data to the base station. In a high-speed downlink packet access (HSDPA) telecommunications network, data and information is sent between user equipment and a base station in data packets on a radio frequency carrier.

Information and data transmitted by the base station to the user equipment occurs on radio frequency carriers known as downlink carriers. Information and data transmitted by user equipment to the base station occurs on radio frequency carriers known as uplink carriers.

In known wireless telecommunication systems operating in single carrier mode, user equipment can move between geographical base station coverage areas. Service provided to user equipment is overseen by a radio network controller (RNC). The radio network controller communicates with user equipment and base stations and determines which base station each user equipment is primarily connected to. Furthermore, a radio network controller acts to control and communicate with a base station and user equipment when user equipment moves from the geographical area served by one base station to a geographical area served by another base station.

It has been proposed to allow base stations and user equipment to each transmit simultaneously on more than one carrier. Furthermore it has been proposed to allow user equipment and base stations to receive simultaneously on more than one carrier frequency. Each carrier, both uplink and downlink, is typically independently power controlled by a base station. Provision of more than one downlink carrier, for example, on four frequency carriers, allows for an increase in data throughput to the user equipment. Networks having more than two carriers may be referred to as "multi cell high speed downlink packet access" (MC-HSDPA) networks. The term "multi-carrier" network used herein is envisaged to cover the case where two, three, four, or more downlink (or uplink) carriers are provided for in a network.

WO2010/051520 describes a method and apparatus for handling uplink transmissions using multiple uplink carriers. The method disclosed allows a wireless transmit and receive unit to select a dedicated channel medium access control flow with highest priority data to be transmitted and performs uplink carrier selection and E-DCH E-TFC (transmit packet size) restriction and selection to select a carrier among a plurality of carriers and a transmit packet size based on available power and grants. In the various embodiments described, transmit power control (TPC) commands are transmitted by a node B, and a wireless transmit and receive unit is power controlled by those TPC commands.

WO2010/088329 describes a method and apparatus for performing dual-carrier operation. A first timer is initiated for an anchor carrier and a second timer is initiated for a supplementary carrier. A physical channel failure may be declared if either of the timers expires before a predefined number of in-synch indication received from a layer 1 entity is counted.

Provision of multi-carrier functionality may have associated problems. Accordingly, it is desired to improve the operation of a wireless telecommunications network having multi-carrier functionality.

SUMMARY

According to a first aspect, there is provided a method of evaluating transmission power for transmission of a primary carrier radio link failure warning message between user equipment and a base station in a multicarrier wireless communications system in which a predetermined set of a plurality of carriers are utilised to support communication between said base station and said user equipment, said predetermined set of said plurality of carriers comprising a primary carrier and at least one secondary carrier, said method comprising the steps of: determining an initial indication of appropriate power setting to enable a message to be transmitted between said user equipment and base station on said primary carrier by determining an initial user equipment transmit power, that initial transmit power having been set by a feedback loop power control message sent between said base station and user equipment; determining that there is a primary carrier radio link failure warning message to be sent between said user equipment and base station at a transmission time after receipt of said initial indication; evaluating, based on said initial indication, an appropriate power setting to enable said primary carrier radio link failure warning message to be transmitted between said user equipment and base station on said primary carrier at said transmission time.

The first aspect recognises that a problem with existing techniques utilised in multi-carrier systems is that the primary carrier carries essential control channels, including, for example, power control messages. If a power control message carried on a primary carrier is not received for some time, it is likely that a network node will experience a change in radio condition. If that network node requires to send a message to another network node, it may no longer have direct instructions regarding a power setting, and thus may be unaware of a suitable power setting at which to attempt to send a message to another network node.

Accordingly, the first aspect allows a network node, even without the usual power control instruction from the primary carrier, to estimate a suitable approximation of required transmission power to ensure a message reaches another network node. The estimation will typically be based upon the last set of power control information received by the transmitting network node, together with an estimation of the change in power associated with a change in radio condition since that initial power control information was received. The estimation of change in transmission power associated with a change in radio condition can be calculated from other information available to, or being received by, a network node, whilst power control messages are absent.

The step of determining the initial indication comprises determining an initial network node transmit power, that initial transmit power having been set by a feedback loop power control message sent between the first and second network nodes. Accordingly, it will be understood that the last power control message received by a network node will take into account the radio condition being experienced between the network nodes, and thus has encoded within it, information regarding a necessary transmit power at an initial time. The step of determining an initital indication may comprise determining the last transmit power setting of the network node.

In a wireless telecommunications system, a primary carrier DPCCH or F-DPCH carries a TPC (Transmit Power Control) command, which controls transmit power. A TPC command is sent by a base station to user equipment and instructs user equipment to increase or decrease its transmit power. A TPC command takes account of radio condition being experienced by a network node, including for example, factors such as path loss, interference and fast fading.

The message to be sent comprises a primary carrier radio link failure warning message. Accordingly, the first aspect may have particular use in the instance that the message to be transmitted between network nodes is a radio link failure warning message. At the point at which a network node enters radio link failure evaluation mode, ie when it begins sending out of sync messages, it also typically operates to shut off its transmitter and since it is out of sync, it will fail to decode subsequent power control messages. Hence if a radio link failure warning is to be sent, the power control command of a network node will typically be out of date. Furthermore, if a network node has moved during the period in which it is evaluating radio link failure, then that physical movement causes differences in required transmit power attributable to a difference in path loss.

In the case of a radio link failure warning, it will be understood that it is particularly important to try and ensure the message propagates through the network, so that appropriate steps can be taken to maintain operation and user experience. In a multicarrier network, early enough receipt of a radio link failure message can help to ensure primary carrier status can be transferred to a secondary carrier and user service interruption is minimised.

Embodiments relate to methods by which to determine or estimate the amount of power required to send a radio link failure warning such that it reaches a base station.

In one embodiment, the step of evaluating comprises setting transmission power for transmission of a message between a first network node and a second network node to a substantially maximum available level. In one embodiment, a network node, for example, user equipment, or a base station, is operable to transmit messages at maximum power as a default. Accordingly, the network node maximizes the chance that a transmitted message will reach an intended network node destination. Such operation may, however, cause interference to other network nodes in a geographical area and thus detrimentally effect operation of the network as a whole.

In one embodiment, the step of evaluating further comprises the step of estimating a likely change in path loss between the first and second network nodes which has occurred between receipt of the initial indication and the transmission time. Accordingly, if network nodes have moved relative to each other, then there will be a change in path loss experienced by a radio signal transmitted between that pair of network nodes. In order to estimate a suitable transmission power at which to send a message without power control orders, it can be helpful for a network node to estimate or calculate an approximate change in path loss experiences since a power control message was safely received. Such an estimation assists in setting a new suitable transmission power.

In one embodiment, the estimation of path loss is based upon a path loss calculated from a pilot channel on a carrier transmitted between the first and second network nodes. Accordingly, some network nodes, for example, base stations, are operable to constantly transmit a pilot, or broadcast, signal. Such a signal is known as a C-PICH (Common Pilot Channel) and is transmitted at a constant power. Monitoring of that constant power signal can give an indication of path loss and fading being experienced one way (for example, in the downlink) between two network nodes.

In one embodiment, the step of evaluating further comprises the step of estimating a likely change in fading between the first and second network nodes which has occurred between receipt of the initial indication and the transmission time.

A signal sent over a radio propagation channel between two network nodes may undergo many paths, for example, as a result of reflections from various stationary and moving objects, before arriving at a receiver. A receiver receives such a signal on more than one occasion as a result of the various propagation paths. The signal of each path will arrive at a different time, power and phase. The sum of the signals having taken each propagation path at the receiver causes the summed signal to attenuate or amplify depending on the phases of the paths. As the environment surrounding the first and second network nodes changes, the multiple path signals change causing fluctuation in the received signal over time. This characteristic is called multipath fading or fast fading. Although direct power control can account for actual radio condition experienced between two network nodes, if no direct power control is available, an estimate of fast fading effects experienced can assist when evaluating an estimate of a change to the last actual power setting, in order to successfully transmit a message at a later point.

In one embodiment, the likely change in fading is assigned a predetermined average value. It is possible to use a pilot channel as an indication of fading being experienced. However, fading occurs differently for different radio frequencies and thus when commissioning a network, a predetermined fading offset can be assigned, that offset being calculated to give an average power offset required to compensate for most fading effects.

In one embodiment, the method further comprises the step of calculating a time period between the receipt of the initial indication and the transmission time and determining whether that time period exceeds a predetermined stable time period.

In addition to overcoming the path loss and fast fading effects, in order to maximize the chances of successful receipt of a message between two network nodes, for example a base station and user equipment, the chosen estimated new transmission power must overcome interference experienced at the base station to achieve a required Signal to Noise & Interference Ratio (SNIR). Interference at a base station is typically dependent upon uplink loading of the cell and neighbouring cells. The loading and hence the interference is managed by the base station and therefore any changes occur more slowly than the changes attributable to fast fading and path loss.

Since the interference at one network node may be managed and changes slowly, and SNIR is typically approximately the same for the same radio channel, if the new power setting is to be evaluated within a time period within which those factors are deemed to be substantially stable, the necessary change can be attributed primarily to fast fade and path loss changes.

In one embodiment, if the time period is determined to be greater than the predetermined time period, the step of evaluating further comprises the step of estimating interference to be overcome to enable a message to be transmitted between the first and second network nodes on the primary carrier at the transmission time. Accordingly, outside a predetermined time delta, even managed interference at a network node can no longer be considered to be substantially unchanged from an initial setting. Accordingly, outside the predetermined time period, in embodiments, the network node operates to decode information which is being received to determine an indication of interference being experienced at the other network node, and thus the power delta required to overcome that interference.

In one embodiment, the step of estimating interference comprises the step of receiving an indication of interference to be overcome to enable a message to be transmitted between the first and second network nodes on the primary carrier at the transmission time. In a particular embodiment, in which the first network node is user equipment and a second network node is a base station, the interference at the base station, $I_{NB}$ is broadcast by a base station via SIB 7 (System Information Block type 7) message. However, a UE in CELL_DCH does not read SIB 7 messages. Hence, if the delay is going to be greater than the stable time period, in order to determine the interference at the base station, UE needs to decode SIB 7 from a broadcast channel.

In one embodiment, the method further comprises the step of transmitting the message at the appropriate power setting at the transmission time, and then repeating transmission of the message at a predetermined time period after the transmission time.

In some circumstances, a first message, for example, radio link failure warning message, may not reach a second network node, for example, a base station, since it may be transmitted when a first network node is experiencing deep fade, unaccounted for by a predetermined offset value. In one embodiment, to overcome unaccounted for deep fading, a UE is operable to repeat transmission of a message, for example, radio link failure warning, one or more times. The network can signal the number of repetitions R to allow the UE to repeat transmission of a message. In such embodiments, a base station may, on receiving a first message, be operable to expect further messages and can combine those messages to increase the reliability of the decoding of the message.

In one embodiment, the method further comprises the step of checking whether an independently power controlled secondary carrier is available and if available, sending the message to be transmitted between the first and second network nodes on the available secondary carrier at the transmission time.

Multi-carrier networks can operate with a single uplink carrier or with multiple uplink carriers. In multiple uplink carrier systems, each uplink carrier is individually power controlled. Thus one possible solution is for user equipment to consider, when there is a radio link failure warning to send in respect of the primary carrier, whether there is an available secondary uplink carrier that could carry a radio link failure warning message to a base station.

Radio link failure on a secondary downlink carrier that has an associated active uplink carrier is independently evaluated. Given the likely difference in loading among the carriers, it is possible that one of the uplink and downlink secondary carriers is in good condition and is being power controlled correctly. In this case, a UE can send any resulting radio link failure warning using this secondary carrier. In some embodiments, the radio link failure message can also contain a recommended secondary carrier for use as a replacement primary carrier.

In one embodiment, the first network node comprises user equipment and the second network node comprises a base station.

A second aspect provides a computer program product operable, when executed on a computer, to perform the method steps of the first aspect.

A third aspect provides user equipment operable to evaluate transmission power for transmission of a primary carrier radio link failure message to a base station in a multicarrier wireless communications system in which a predetermined set of a plurality of carriers are utilised to support communication between said user equipment and said base station, said predetermined set of said plurality of carriers comprising a primary carrier and at least one secondary carrier, said user equipment comprising: power determination logic operable to determine an initial indication of appropriate power setting to enable a message to be transmitted between said user equipment and said base station on said primary carrier by determining an initial user equipment transmit power, that initial transmit power having been set by a feedback loop power control message sent between said base station and said user equipment; message determination logic operable to determine that there is a primary carrier radio link failure warning message to be sent between said user equipment and said base station at a transmission time after receipt of said initial indication; and power evaluation logic operable to evaluate, based on said initial indication, an appropriate power setting to enable said primary carrier radio link failure warning message to be transmitted between said user equipment and said base station on said primary carrier at said transmission time.

In one embodiment, the evaluation logic is operable to set transmission power for transmission of a message between a first network node and a second network node to a substantially maximum available level.

In one embodiment, the evaluation logic is operable to estimate a likely change in path loss between the first and second network nodes which has occurred between receipt of the initial indication and the transmission time.

In one embodiment, the estimation of path loss is based upon a path loss calculated from a pilot channel on a carrier transmitted between the first and second network nodes.

In one embodiment, the evaluation logic is further operable to estimate a likely change in fading between the first and second network nodes which has occurred between receipt of the initial indication and the transmission time.

In one embodiment, the likely change in fading is assigned a predetermined average value.

In one embodiment, the network node further comprises time delta calculation logic operable to calculate a time period between receipt of said initial indication and the transmission time and determine whether that time period exceeds a predetermined stable time period.

In one embodiment, if said time period is determined to be greater than the predetermined time period, the evaluation logic is further operable to estimate interference to be overcome to enable a message to be transmitted between the first and second network nodes on the primary carrier at the transmission time.

In one embodiment, the step of estimating interference comprises the step of receiving an indication of interference to be overcome to enable a message to be transmitted between the first and second network nodes on said primary carrier at the transmission time.

In one embodiment, the network node further comprises transmission logic and repetition logic operable to transmit the message at the appropriate power setting at said transmission time, and then repeat transmission of the message at a predetermined time period after the transmission time.

In one embodiment, the network node further comprises secondary carrier evaluation logic operable to check whether an independently power controlled secondary carrier is available and if available, and send the message to be transmitted between the first and second network nodes on the available secondary carrier at the transmission time.

Further particular and preferred aspects are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

Embodiments of the present invention will now be described further, with reference to the accompanying drawings, in which:

Figure 1 illustrates a wireless telecommunications system according to one embodiment;
Figure 2 illustrates a radio link failure evaluation performed by the user equipment according to one embodiment;

Figure 3 illustrates an explicit radio link failure evaluation performed by the user equipment according to one embodiment;
Figure 4 illustrates schematically fast fading of a radio signal;
Figure 5 illustrates the fast fading of a signal power for an example in which a UE is moving at 3 km per hour for a signal operating in 2000 MHz;
Figure 6 illustrates schematically the operation of user equipment in accordance with one embodiment; and
Figure 7 is a schematic illustration of a radio link failure warning scenario in accordance with one embodiment.

DETAILED DESCRIPTION OF EMBODIMENTS

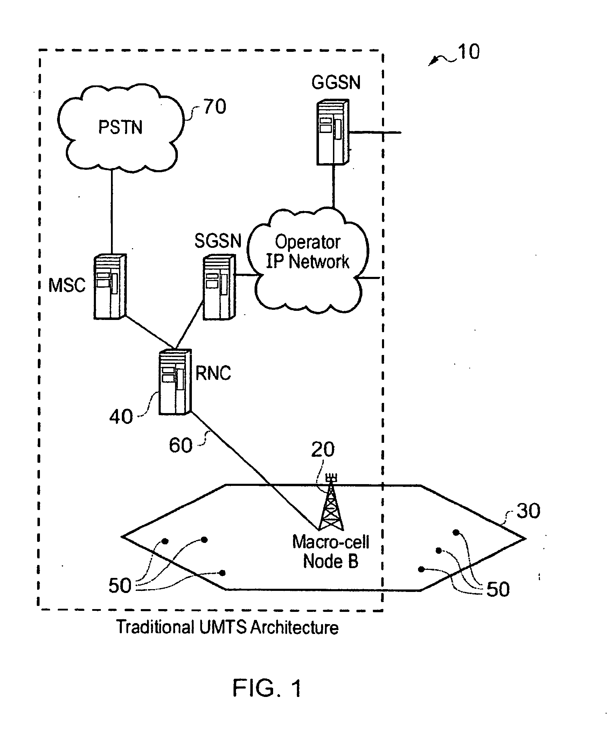

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The radio access network of the wireless communications system is managed by a radio network controller (RNC) 40. The radio network controller 40 controls operation of the wireless communications system by communicating with a plurality of base stations over a backhaul communications link 60. The network controller also communicates with user equipment 50 via each base station.

A radio network controller 60 maintains a neighbour list which includes information about geographical relationships between sectors supported by base stations 20. In addition, the radio network controller 60 maintains location information which provides information on the location of user equipment 50 within the wireless communication system 10. The radio network controller is operable to route traffic via circuit switched and packet switched networks. Hence, a mobile switching centre is provided with which the radio network controller may communicate. The mobile switching centre can communicate with a circuit switched network such as a public switched telephone network (PSTN) 70. Similarly, a network controller can communicate with service general package radio service support nodes (SGSNs) and a gateway general packet support node (GGSN). The GGSN can communicate with a packet switched core such as for example, the Internet.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the radio network controller 40, allocates resources to user equipment in a manner that aims to optimise operation of the wireless telecommunications network 10.

In Universal Mobile Telecommunications System (UMTS), a Multi-Cell High Speed Downlink Packet Access (MC-HSDPA) arrangement is provided. In MC-HSDPA, a sector is defined as the geographical coverage area of a base station or Node B. A sector can consist of several cells, where each cell aims to cover the same geographical coverage as the sector and uses a separate frequency carrier for its transmission. The frequency carrier can be within the same frequency band or distributed over two frequency bands. MC-HSDPA is an extension to Dual Cell High Speed Downlink Packet Access (DC-HSDPA). In MC-HSDPA, user equipment can receive up to four simultaneous downlink transmissions from four different cells. Hence, MC-HSDPA can potentially double and quadruple the downlink throughput of DC-HSDPA and (Single Cell) HSDPA respectively. MC-HSDPA is also sometimes referred to as 4C-HSDPA (four Cell HSDPA) or 3C-HSDPA when the user equipment receives simultaneous transmissions from four or three cells respectively.

In a multi-carrier system, each carrier will have independent downlink radio links from a base station to user equipment. Those downlink radio links are managed independently since each carrier will likely have different radio propagation paths to user equipment. For HSDPA systems capable of operating in multi-carrier mode, more than two downlink carriers may be provided. It will be appreciated that in a multi-carrier network, the number of downlink carriers may not match the number of uplink carriers. Furthermore, the number of downlink carriers provided may not be exactly double the number of uplink carriers provided. In HSDPA multi-carrier mode, each sector served by a base station can have several carrier frequencies or "carriers" associated therewith. A carrier or cell supported by a carrier covers the same geographical region as a sector. Each cell is served by a different carrier frequency. It will therefore be understood that in a single carrier system, a cell is equivalent to a sector since a sector has only one cell or carrier frequency. Nonetheless, in a multi-carrier network each sector may comprise several cells each cell being served simultaneously by a different carrier frequency.

User equipment can be in Idle mode or in Radio Resource Control (RRC) Connected Mode. Cell_DCH state is one of the states within RRC Connected Mode where user equipment can transmit and receive high data throughput. The MC-HSDPA feature operates in Cell_DCH state, where in this state user equipment and Node B maintain physical layer synchronisations in the uplink and downlink. A Radio Link Failure (RLF) occurs when the user equipment loses its radio link connection due to loss of downlink physical layer synchronisation with the serving Node B. Radio link failure will cause the user equipment to exit the Cell_DCH state and thereby loose its high data throughput capability. In MC-HSDPA, a radio link failure will cause the user equipment to operate in a single cell with low throughput. Hence, the loss in throughput due to radio link failure may be much higher in MC-HSDPA compared to that in a single cell HSDPA operation. Radio link failure can have a significant impact on user experience, particularly in a multi-carrier system. For example, in a 4C-HSDPA network, a user fully using multi-carrier functionality would typically be using a high bandwidth service, for example, high quality video streaming, and radio link failure of primary carrier would result in loss of the high data throughput necessary.

In MC-HSDPA, the primary carrier is the cell that carries essential control channels and it cannot be deactivated. There is only one primary carrier and the other cells are called secondary carriers (e.g. Secondary Carrier 1, Secondary Carrier 2 and Secondary Carrier 3). The user equipment will declare radio link failure if the primary carrier radio link fails, even if the secondary carriers are working perfectly (e.g. if they are lightly loaded or if they have a better radio channel). The secondary carriers provide natural radio link redundancies but these redundancies cannot be utilised.

Although the primary carrier can be changed using Radio Bearer Reconfiguration or other RRC signalling from the radio network controller 60 this process is usually slow and may not be sufficient in the event where user equipment is losing its radio link connection or if a fast primary carrier change is required (e.g. to quickly manage loading among the carriers). Change of a primary carrier using Radio Bearer Reconfiguration or other RRC signalling is typically triggered using event 2X and can be slow. Furthermore the process requires user equipment to operate in compress mode (CM) which degrades user equipment reception. Since the process is slow it is possible that user equipment can fall into full radio link failure before it successfully triggers an event 2X.

Embodiments provide a technique to set transmission power at which a radio link failure warning indication is sent to ensure it has an improved chance of reaching another network node, for example base station, so that in turn it is possible to utilise the natural radio link redundancies provided by the secondary carriers in MC-HSDPA to give high radio link reliability for the user equipment thereby increasing the robustness of operation of the network.

PRIMARY CARRIER CHANGE - OVERVIEW

Upon detecting an event requiring a change in primary carrier, a primary carrier change is sent using a HS-SCCH order, which is layer one or physical layer instruction. Because the HS-SCCH order is a layer one or physical layer instruction, the change in primary carrier can be effected very quickly to enable a fast change to occur when, for example, rapid degradation in the primary carrier occurs or when load balancing between carriers is required. To enable such switching to occur, the user equipment is preconfigured for operation with any of the secondary carriers acting as a primary carrier. This is required since the HS-SCCH order bypasses the radio network controller 40 and therefore the radio access bearer (RAB) information required to configure the user equipment to operate in another primary carrier is not sent. In such RAB preconfiguration, the required RAB information is sent to the user equipment during setup (for example, when user equipment moves to a new serving Node B) for use if the relevant HS-SCCH order is sent. The HS-SCCH order may encode the change in carrier information using suitable bit fields of this order.

The HS-SCCH order will typically be sent on the secondary carrier that is selected by the Node B to be the potential primary carrier and the HS-SCCH order indicates that the existing primary carrier is deactivated. The advantages of this approach are that it avoids having to define a new HS-SCCH order (i.e. no extra signalling message required); the existing primary carrier is likely to be in a poor radio condition (hence the need to change it) and may not be received if transmitted on the primary carrier - however, since the HS-SCCH order comes from the potential primary carrier (i.e. one of the secondary carriers) that is likely to have a better radio condition, it has a higher chance of reaching the user equipment; in the same HS-SCCH order, in addition to changing the primary carrier, the Node B is able to activate/deactivate other secondary carrier(s); and fast primary carrier change is possible since the radio network controller 40 is bypassed.

Upon receiving the HS-SCCH order, the user equipment will send an acknowledgement to the Node B and proceed to change the primary carrier to the frequency carrier (i.e. one of the existing secondary carriers) specified by the Node B within a specified amount of time. When the primary carrier change is complete the user equipment will send a Primary Change confirmation message to the radio network controller 40. The Node B can also inform the radio network controller 40 of the change in primary carrier for that user equipment once it receives an acknowledgement from the user equipment. This can optionally save the user equipment from having to send a confirmation message to the radio network controller 40.

As will be mentioned in more detail below, in embodiments, the user equipment may defer changing the primary carrier for a predetermined period of time to avoid making unnecessary changes in primary carrier due to transient events. Should no change be necessary, then the user equipment will inform the Node B that no change to primary carrier occurred.

EVENT DETECTION

User equipment either explicitly or implicitly provides indicators which warn the network that a primary carrier change is required. Typically, the user equipment needs to warn the network of a possible need to change primary carrier before the event which could lead to loss or disruption in communications occurring. For example, the user equipment needs to warn of a possible radio link failure so that a change in primary carrier can be executed before radio link failure occurs.

RADIO LINK FAILURE

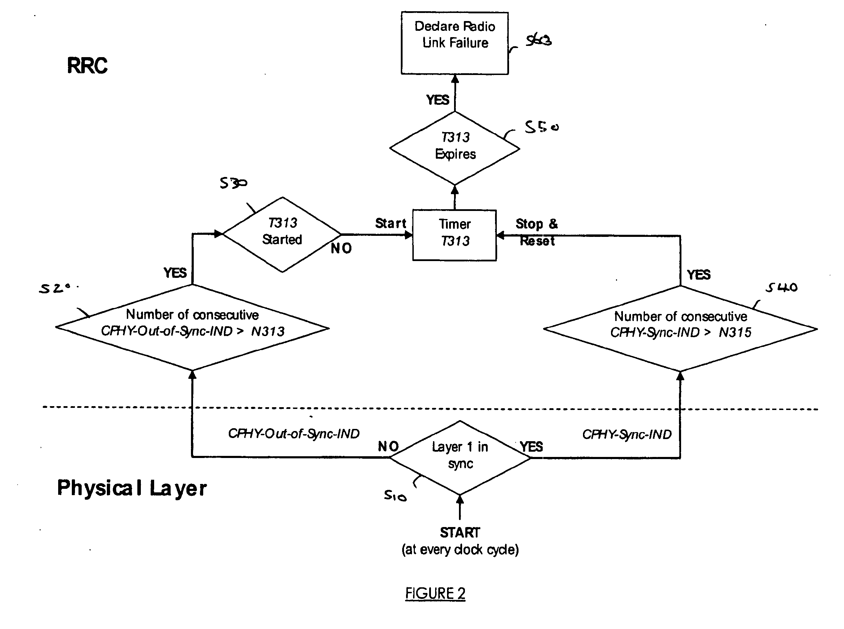

The radio link failure evaluation performed by the user equipment summarized in Figure 2. At step S10, The user equipment in Cell_DCH continuously checks for downlink physical layer (layer 1) synchronisation by determining the quality of the downlink DPCCH (Dedicated Physical Control Channel) or F-DPCH (Fractional Dedicated Channel). If the user equipment is in sync, it will send an in-sync primitive, *CPHY-Syn-IND* and if the user equipment is out of sync, it will send an out-of-sync primitive, *CPHY-Out-of-Sync-IND* to the RRC layer.

At the RRC layer, the user equipment counts the number of consecutives *CPHY-Out-of-Sync-IND* primitive at step S20 and, if it is above a threshold N313, the timer *T313* is started at step S30.

At step S40, timer T313 is stop and reset if the RRC layer receives *N315* consecutive *CPHY-Syn-IND* primitives from the physical layer.

At step S50 a determination is made of whether T313 has expired (typically after 3 seconds) and, if so, at step S60, the user equipment declares radio link failure.

If the user equipment is performing DRx (Discontinuous Reception) it does not send *CPHY-Sync-IND* or *CPHY-Out-of-Sync-IND* primitives. The counting leading up to *N315* consecutive *CPHY-Syn-IND* or *N313* consecutive *CPHY-Out-of-Sync-IND* primitives ignores missing sync primitives.

EXPLICIT RADIO LINK FAILURE WARNING

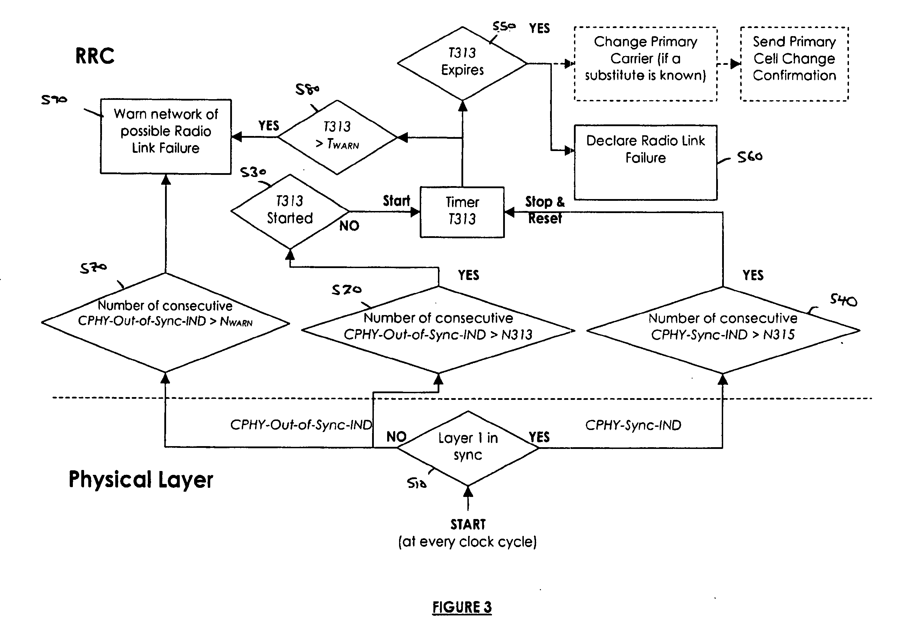

Figure 3 shows an embodiment where an explicit warning can be sent to the network. The warning is sent at step S90 and occurs as soon as $N_{WARN}$ *CPHY-Out-of-Sync-IND* consecutive primitives have been determined at step S70 to be received from the physical layer. If $N_{WARN}$ is set smaller than *N313,* an early warning will be provided allowing the network to change the user equipment's primary carrier faster.

This can lead to less service interruption since user equipment do not need to wait for timer *T313* to expire. However, this may led to premature warnings or trigger a high number of unnecessary primary carrier changes. To avoid this, $N_{WARN}$ can be set greater than *N313,* but this may cause the timer T313 to expire before $N_{WARN}$ consecutive *CPHY-Out-of-Sync-IND* are reached. This is more likely to happen when user equipment is performing DRx where it does not evaluate the sync quality and therefore does not send any synchronization primitives.

Alternatively, the radio link failure warning can be sent when the timer T313 exceeds a value $T_{WARN}$. $T_{WARN}$ is another timer that is started when *T313* starts and has an earlier expiry time to that in timer T313. Both $T_{WARN}$ and T313 stop and reset at the same time. Since the T313 timer can be stopped and reset if N315 consecutive *CPHY-Syn-IND* primitives are received, using $T_{WARN}$ criteria, the radio link failure warning to the network can be cancelled if the radio link of the existing primary carrier recovers. In contrast, using the $N_{WARN}$ criteria does not allow the radio link failure warning to be cancelled.

In addition to provide a warning of a possible radio link failure, the radio link failure warning message should also indicate to the network which secondary carrier the user equipment believes would be the best replacement for the existing (failing) primary carrier since the user equipment performs regular measurements (e.g. on the pilot) of all secondary carriers.

The explicit radio link failure warning can be sent in one of two ways. The first is using an RRC message. Since RRC is at the higher layer, $T_{WARN}$ needs to be set such that it has sufficient time margin between $T_{WARN}$ and T313 for this message to reach the network and react upon it. The second is using a Reserved E-TFCI (E-DCH Transport Format Combination Indicator) using the E-DPCCH (E-DCH Dedicated Physical Control Channel). This is sent at the physical layer, which is faster than the RRC level allowing a fast reaction from the Node B. E-TFCI has a length of 7 bits and contains information required to decode uplink HSUPA data packets contained in the E-DPDCH (E-DCH Dedicated Physical Data Channel) but some E-TFCI are not used (i.e. reserved for future use) and so may be utilised to encode the radio link failure warning.

## IMPLICIT RADIO LINK FAILURE WARNING

Although the network does not know whether user equipment is approaching radio link failure, the network receives measurements on each carrier from the user equipment. The network therefore is able to implicitly determine whether the primary carrier is deteriorating beyond a threshold and also is able to determine a suitable secondary carrier (if any) to replace the existing primary carrier. The measurements that can be used are as follows (either alone or in combination).

User equipment measurement reports may be used which indicate the quality of the CPICH of each carrier. This is at the RRC level (i.e. interpreted at the radio network controller) and the network may not response fast enough. Furthermore, measurements on secondary carriers may need to be configured as inter-frequency measurements, which has less frequent updates and in some situation may not even be measured.

Channel Quality Information (CQI) may be used which indicate the throughput (transport block size) that the user equipment can support based on the quality of the radio link on each carrier. This is sent at the physical layer by the HS-DPCCH (High Speed Dedicated Physical Control Channel) for each carrier. The CQI is sent periodically and usually at a higher rate than that of the user equipment measurement reports. Since CQI is interpreted at the Node B, the Node B needs to make the decision whether to change the primary carrier. The user equipment can implicitly warn the Node B of a possible radio link failure by encoding that the CQI = 0 for the primary carrier and sending this to the Node B even if the CQI for primary carrier is above zero. This can be sent when either $N_{WARN}$ or $T_{WARN}$ criteria is met (as described above in relation to explicit radio link failure). A CQI of zero usually indicates "Out of Range" except when the user equipment is configured with MIMO — Multiple-In Multiple-Out (where it indicates a support for an actual transport block size). However, it is unlikely that user equipment experiencing possible radio link failure will be in MIMO mode since MIMO requires very high quality radio link and the Node B knows whether the user equipment is using MIMO. An example CQI criteria is that the Node B counts the number of consecutive CQI=0 and, if it is above a threshold $N_{CQI}$, the Node B will execute a primary carrier change using an HS-SCCH order.

An implicit radio link failure warning (e.g. using CQI=0) is dependent upon the network's (e.g. Node B) ability to estimate that the user equipment is experiencing radio link failure. If the Node B is too slow in detecting a possible radio link failure (e.g. due to having a large $N_{CQI}$ threshold), the user equipment may declare radio link failure before a change of primary carrier is made. On the other hand, a Node B that executes a change in primary carrier too early may cause frequent unnecessary primary carrier changes. However, this prevents a potential radio link failure or even prevents the user equipment from having to start the *T313* timer, which can potentially improve the overall throughput of the user equipment since the user equipment will always select a frequency carrier that is strong enough to be the primary carrier.

## RADIO PROPAGATION

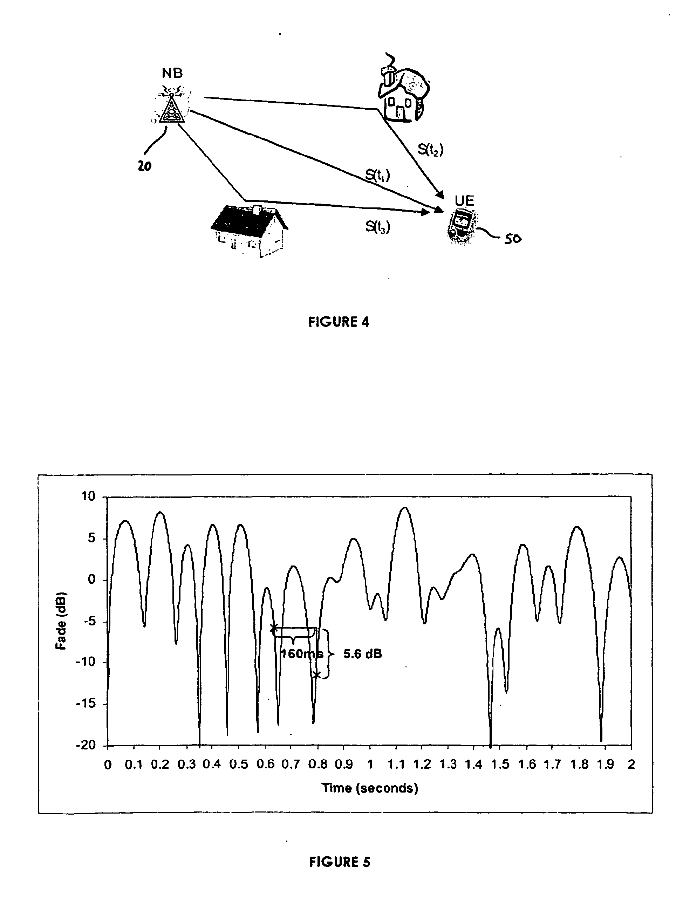

Figure 4 illustrates schematically fast fading of a radio signal. A signal sent over a radio propagation channel from a base station 20 to UE 50 may undergo many paths, for example, as a result of reflections from various stationary and moving objects, before arriving at a receiver 50 as shown in Figure 4. The receiver 50 receives this signal on more than one occasion as a result of the various propagation paths. In Figure 4, three paths are shown: $S(t_1)$, $S(t_2)$ and $S(t_3)$. The signal of each path will arrive at a different time, power and phase. The sum of the signals having taken each propagation path at the receiver causes the summed signal to attenuate or amplify depending on the phases of the paths.

As the UE and its surrounding changes, the multiple path signals changes causing fluctuation in the received signal over time. This characteristic is called multipath fading or fast fading.

Figure 5 illustrates the fast fading of a signal power for an example in which a UE is moving at 3 km per hour for a signal operating in 2000 MHz. Figure 5 shows that fast fading causes the signal received by user equipment 50 can significantly fluctuate even over a short time span.

As described previously, a UE 50 begins start sending out of sync messages (i.e. *CPHY-Out-of-Sync-IND*) to the RRC layer indicating a loss in synchronisation if the UE loses sync of the DPCCH (Dedicated Physical Control Channel) or F-DPCH (Fractional Dedicated Physical Channel) for more than a predetermined period of time, typically in the region of 160 ms.

The DPCCH or F-DPCH carries a TPC (Transmit Power Control) command which controls UE transmit power.

At the point at which UE 50 enters radio link failure evaluation mode, ie when it begins sending out of sync messages, a UE typically operates to shut off its transmitter and the RRC layer at the UE begins evaluating for full radio link failure. Hence if a radio link failure warning is sent, the TPC command will typically be out of date by at least 160 ms.

As illustrated by Figure 5, in a 160ms period or longer, UE typically experiences fast fading effects and the required power to overcome the fading effects after 160 ms can differ greatly to the required power to overcome adding effects at the time the last TPC command was received. In the example time period of 160ms shown in Figure 5, there is a 5.6 dB difference.

A radio link failure warning is typically sent at a delay of longer than 160ms from receipt of the last TPC command since the timing of sending of a radio link failure warning depends on the $N_{WARN}$ or $T_{WARN}$ criteria chosen on commissioning of the network.

Furthermore, if the UE has moved during the period in which the UE RRC layer is evaluating radio link failure, then that physical movement causes additional differences in required transmit power attributable to a difference in path loss.

Embodiments relate to methods by which to determine or estimate the amount of power required to send a radio link failure warning such that it reaches a base station.

RADIO LINK FAILURE WARNING MESSAGE TRANSMIT POWER EVALUATION

Multi-carrier networks can operate with a single uplink carrier or with multiple uplink carriers. In multiple uplink carrier systems, each uplink carrier is individually power controlled. Thus one possible solution is for user equipment to consider, when there is a radio link failure warning to send in respect of the primary carrier, whether there is an available secondary uplink carrier that could carry a radio link failure warning message to a base station.

Radio link failure on a secondary downlink carrier that has an associated active uplink carrier is independently evaluated. Given the likely difference in loading among the carriers, it is possible that one of the uplink and downlink secondary carriers is in good condition and is being power controlled correctly. In this case, a UE can send any resulting radio link failure warning using this secondary carrier. In some embodiments, the radio link failure message can also contain a recommended secondary carrier for use as a replacement primary carrier.

If only a single uplink carrier is available, a UE wishing to send a radio link failure warning needs to estimate the required transmit power for transmission of that warning message. In one embodiment, UE is operable to transmit such messages at maximum power as a default. Such operation may cause interference to other UEs in the uplink, and thus detrimentally effect the operation of the network as a whole.

In addition to overcoming the path loss and fast fading effects, in order to maximize the chances of successful receipt of the radio link failure warning at the base station, the chosen transmission power must overcome interference experienced at the base station to achieve a required Signal to Noise & Interference Ratio (SNIR). Interference at a base station is dependent upon the uplink loading of the cell and neighbouring cells. The loading and hence the interference is managed by the base station and therefore any changes occur more slowly than the changes attributable to fast fading.

The TPC command sent by a base station to UE instructs a UE to increase or decrease its transmit power. The TPC command takes account of the path loss, fast fading and interference, and accordingly the UE transmit power (set indirectly by the TPC command) contains this information.

Thus the UE transmit power $P_{TX}$ in dBm can be represented as:

$$P_{TX} = SNIR + I_{NB} + G_{PATH} + G_{FADE} + C$$

*Equation 1*

Where:

● *SNIR* is the required Signal to Noise and Interference ratio in dB necessary to correctly receive the signal at a base station
● $I_{NB}$ is the interference in dB at the base station
● $G_{PATH}$ is the path loss between the base station and UE
● $G_{FADE}$ is the fading at the UE
● C is a constant that provides an offset to the required power. This term can, of course, be zero.

Only the uplink DPCCH of the UE is power controlled. The transmit power for the other uplink physical channels, for example, HS-DPCCH, E-DPCCH and E-DPDCH, are derived from the transmit power of the uplink DPCCH.

Since the $I_{NB}$ is managed and changes slowly and SNIR is typically approximately the same for the same radio channel, the UE transmit power $P_{TX}$ given in Equation 1 becomes a function of $G_{PATH}$ and $G_{FADE}$. Thus, if considering a short period of time, $T_{DELAY}$, it can be assumed that $P_{TX}$ is given by approximately:

$$P_{TX} = K + G_{PATH} + G_{FADE}$$

*Equation 2*

Where K = *SNIR* + $I_{NB}$ + C, and is a constant within the short period of time $T_{DELAY}$.. The information in the constant K can be obtained from the last UE transmit power that is based on a valid TPC. Let this power be $P_{TX\text{-}TPC}$ and is expressed as:

$$P_{TX-TPC} = SNIR + I_{NB} + G_{PATH-TPC} + G_{FADE-TPC} + C$$
$$= K + G_{PATH-TPC} + G_{FADE-TPC}$$

*Equation 3*

Where:

● $G_{PATH\text{-}TPC}$ is the path loss at the time where the last valid TPC is received
● $G_{FADE\text{-}TPC}$ is the fading at the time where the last valid TPC is received

Solving Equation 3 for K and substituting into Equation 2 we have

$$P_{TX} = P_{TX-TPC} + G_{PATH} - G_{PATH-TPC} + G_{FADE} - G_{FADE-TPC}$$
$$= P_{TX-TPC} + \Delta G_{PATH} + \Delta G_{FADE}$$

*Equation 4*

Where:

● $\Delta G_{PATH} = G_{PATH} - G_{PATH\text{-}TPC}$ is the change in path loss
● $\Delta G_{FADE} = G_{FADE} - G_{FADE\text{-}TPC}$ is the change in fading

Therefore, if the delay between the last valid TPC received and the transmission of a radio link failure warning is less than $T_{DELAY}$, the UE transmit power $P_{TX}$ can be derived by just tracking the changes in path loss and fading.
A base station pilot, C-PICH (Common Pilot Channel) is transmitted at constant power and hence it gives an indication of the path loss and fading in the downlink. The fading in the uplink is likely going to be different than that in the downlink since in FDD (Frequency Division Duplex), the uplink and downlink operate in different frequencies.
The base station C-PICH may not be effective in estimating the fading but it still gives an indication of the path loss between the UE and a base station. Hence the changes in path loss, $\Delta G_{PATH}$ can be considered to be proportional to the change in C-PICH received power at the UE, $\Delta P_{C\text{-}PICH}$.
Instead of trying to track the fading in the uplink, in embodiments the fading is overcome by transmitting at additional power by an amount given by $C_{FADE}$ (in dB). This value $C_{FADE}$ can be signaled to the UE, and set when commissioning a network, or user equipment.
Thus, for a delay less than $T_{DELAY}$, the transmit power is:

$$P_{TX} = P_{TX-TPC} + \Delta P_{C-PICH} + C_{FADE}$$

*Equation 5*

The delay $T_{DELAY}$ for a given implementation is signaled to the UE by the network.
If the delay is more than $T_{DELAY}$, the interference at the base station, $I_{NB}$ can no longer be considered to be a constant.
The interference $I_{NB}$ is broadcast by a base station via SIB 7 (System Information Block type 7) message. However, a UE in CELL_DCH does not read SIB 7 messages. Hence, if the delay is going to be greater than $T_{DELAY}$, in order to determine the interference at the base station, UE needs to decode SIB 7 from the broadcast channel. The radio link failure warning can be sent using an open loop power control similar to that used for PRACH (Physical Random Access Channel). The UE works out the path loss (given by the difference between the C-PICH transmit power $P_{TX\text{-}CPICH}$ and receive power at the UE $P_{RX\text{-}CPICH}$). The C-PICH transmit power is broadcast to the UE via SIB (5, 5bis or 6). The $P_{TX}$ power for delay greater than $T_{DELAY}$ is thus:

$$P_{TX} = P_{TX-CPICH} - P_{RX-CPICH} + I_{NB} + C_{OL}$$

**Equation 6**

Where:

- $C_{OL}$ is a constant used in this open loop power control method and this can be signaled to the UE.

In some circumstances, a first radio link failure warning may not reach a base station since it may be transmitted when the UE is in a deep fade, unaccounted for by predetermined value $C_{FADE}$. In one embodiment, to overcome unaccounted for deep fading, UE is operable to repeat transmission of a radio link failure warning one or more times. The network can signal the number of repetitions R to allow the UE to repeat transmission of a radio link failure warning. In such embodiments, a base station may, on receiving a first radio link failure warning, be operable to expect further radio link failure warning messages and can combine those radio link failure warnings to increase the reliability of the decoding of the message.

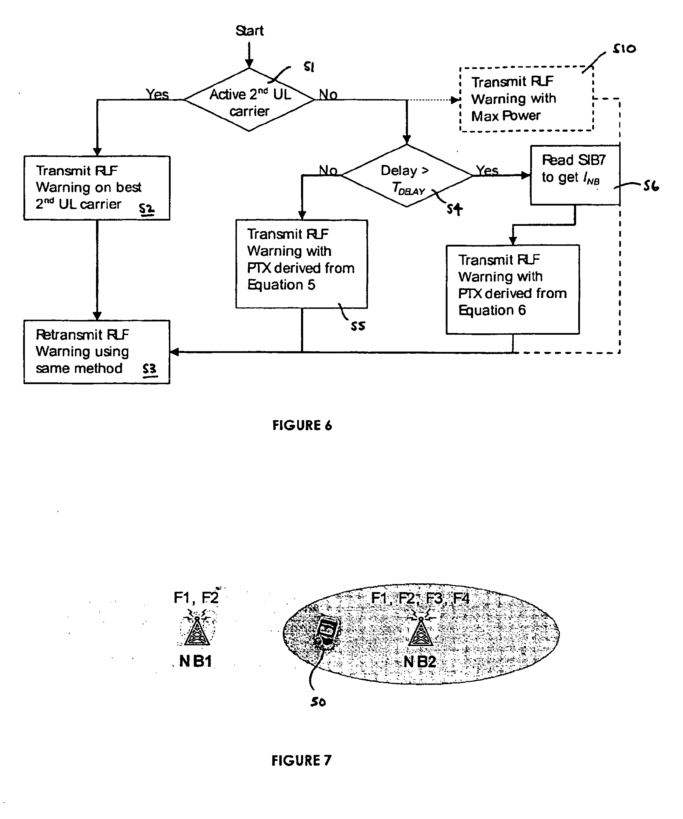

Figure 6 illustrates schematically the operation of user equipment in accordance with one embodiment. If UE has entered radio link failure evaluation and has determined that a radio link failure warning message is to be sent, the transmission power at which the message is to be sent can be determined by following the process set out in Figure 6. At step S1, the UE determines whether there is a second active uplink carrier and whether the UE can transmit a RLF Warning using an active uplink secondary carrier. If uplink secondary carriers are available, the UE is operable to send the radio link failure warning using the best uplink secondary carrier (step S2). Assessment of best uplink secondary carrier can, for example, be based upon the secondary carrier determined to have the best CQI). The UE is operable to repeat transmission of the radio link failure warning, shown as step S3.

If, at step S1 the UE determines that there is no uplink secondary carrier, the UE is operable in accordance with step S4 to determine whether the delay between reception of the last valid TPC and the time the radio link failure warning message is to be sent is greater than $T_{DELAY}$. If the delay is not greater than $T_{DELAY}$ then the UE is operable at step S5, to derive the transmit power $P_{TX}$ using Equation 5. If the delay is greater than $T_{DELAY}$ then the UE is operable at step S6, to start reading SIB7 to obtain the uplink interference $I_{NB}$ and derive (step S7) the transmit power $P_{TX}$ using the open loop power control method of Equation 6.

The UE is operable to repeat transmission of a radio link failure warning as shown at step S3. In embodiments the retransmission typically uses the same transmission method or power, ie if the warning was initially sent using an uplink secondary carrier, the repetition will also use the same uplink secondary carrier.

In alternative embodiments, if the UE determines at step S 1 that there is no active second uplink carrier, it may be operable to transmit a radio link failure warning at maximum transmit power (step S10), then repeat that transmission at step S3.

Figure 7 is a schematic illustration of a radio link failure warning scenario in accordance with one embodiment. Figure 7 illustrates a UE 50, attached to a base station NB2. The UE 50 is located in an overlapping region of coverage provided between two base stations, NB1 and NB2. NB1 operates only in frequency F1 and F2 whilst NB2 operates in 4C-HSDPA with F1, F2, F3 and F4. The UE primary carrier is F1 and Secondary Carrier 1 (SC 1) is F2, Secondary Carrier 2 (SC2) is F3 and Secondary Carrier 3 (SC3) is F4. The UE only has one uplink carrier. The network signals $T_{DELAY}$, $C_{FADE}$, $C_{OL}$ and the R (the number of times the RLF Warning is repeated) to the UE, which are the constants required to calculate Equation 5 and Equation 6.

Since NB1 also operates in F1 and F2, in the coverage overlap region the UE experiences higher interference in F1 and F2, and in the scenario illustrated UE 50 loses sync on its primary carrier in F1. When the UE first loses sync of the F-DPCH (or DPCCH) it stores the latest transmit power $P_{TX-TPC}$ and also the received C-PICH power, $P_{RX-CPICH-TPC}$ at the time of receipt of the last valid TPC. The out of sync with the F-DPCH (or DPCCH) lasts for 160 ms and the UE starts sending *CPHY-Out-of-Sync-IND* primitives to the UE RRC layer, where the RRC layer starts to evaluate for radio link failure.

The radio link failure warning evaluation according to Figure 3 is implemented by UE 50, and in the scenario shown, the UE determines a radio link failure warning message is to be sent. In this case, the delay between the last valid TPC command and the decision to send a radio link failure warning is less than $T_{DELAY}$. Hence, in accordance with the process shown in Figure 6, the UE uses Equation 5 to calculate the transmit power required for the radio link failure warning. The UE uses the stored value of $P_{RX-CPICH-TPC}$ and the received C-PICH power $P_{RX-CPICH}$ to calculate $\Delta P_{C-PICH}$ as follows (all in dB):

$$\Delta P_{C-PICH} = P_{RX-CPICH-TPC} - P_{RX-CPICH}$$

*Equation 7*

Where:

$P_{RX-CPICH}$ is the received C-PICH power at the point where the decision to send the radio link failure warning is made.

Using the stored value of $P_{TX-TPC}$, the signalled value $C_{FADE}$ and Equation 7, the UE can thus calculate the transmit power $P_{TX}$ using Equation 5. The UE then repeats transmission of the radio link failure warning another R -1 times at power $P_{TX}$.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method of evaluating transmission power for transmission of a primary carrier radio link failure warning message between user equipment (50) and a base station (20) in a multicarrier wireless communications system (10) in which a predetermined set of a plurality of carriers are utilised to support communication between said base station (20) and said user equipment (50), said predetermined set of said plurality of carriers comprising a primary carrier and at least one secondary carrier, said method comprising the steps of:

   determining an initial indication of appropriate power setting to enable a message to be transmitted between said user equipment (50) and base station (20) on said primary carrier by determining an initial user equipment transmit power, that initial transmit power having been set by a feedback loop power control message sent between said base station and user equipment (50);

determining that there is a primary carrier radio link failure warning message to be sent between said user equipment (50) and base station (20) at a transmission time after receipt of said initial indication:

evaluating, based on said initial indication, an appropriate power setting to enable said primary carrier radio link failure warning message to be transmitted between said user equipment (50) and base station (20) on said primary carrier at said transmission time.

2.   A method according to claim 1, wherein said step of evaluating comprises setting transmission power for transmission of a message between user equipment (50) and base station (20) to a substantially maximum available level.

3.   A method according to any preceding claim, wherein said step of evaluating further comprises the step of estimating a likely change in path loss between said user equipment and base station which has occurred between receipt of said initial indication and said transmission time.

4.   A method according to claim 3, wherein said estimation of path loss is based upon a path loss calculated from a pilot channel on a carrier transmitted between said base station (20) and user equipment (50).

5.   A method according to any preceding claim, wherein said step of evaluating further comprises the step of estimating a likely change in fading between said base station (20) and user equipment (50) which has occurred between receipt of said initial indication and said transmission time.

6.   A method according to claim 5, wherein said likely change in fading is assigned a predetermined average value.

7.   A method according to any preceding claim, further comprising the step of calculating a time period between said receipt of said initial indication and said transmission time and determining whether that time period exceeds a predetermined stable time period.

8.   A method according to claim 7, wherein if said time period is determined to be greater than said predetermined time period, said step of evaluating further comprises the step of estimating interference to be overcome to enable a message to be transmitted between said user equipment (50) and base station (20) on said primary carrier at said transmission time.

9.   A method according to claim 8, wherein said step of estimating interference comprises the step of receiving an indication of interference to be overcome to enable a message to be transmitted between said user equipment (50) and base station (20) on said primary carrier at said transmission time.

10.  A method according to any preceding claim, further comprising the step of transmitting said primary carrier radio link failure warning message at said appropriate power setting at said transmission time, and then repeating transmission of said primary carrier radio link failure warning message at a predetermined time period after said transmission time.

11.  A method according to any preceding claim, further comprising the step of checking whether an independently power controlled secondary carrier is available and if available, sending said primary carrier radio link failure warning message to be transmitted between said user equipment (50) and said base station (20) on said available secondary carrier at said transmission time.

12.  User equipment (50) operable to evaluate transmission power for transmission of a primary carrier radio link failure message to a base station (20) in a multicarrier wireless communications system in which a predetermined set of a plurality of carriers are utilised to support communication between said user equipment (50) and said base station (20), said predetermined set of said plurality of carriers comprising a primary carrier and at least one secondary carrier, said user equipment comprising:

power determination logic operable to determine an initial indication of appropriate power setting to enable a message to be transmitted between said user equipment (50) and said base station (20) on said primary carrier by determining an initial user equipment (50) transmit power, that initial transmit power having been set by a feedback loop power control message sent between said base station and said user equipment;
message determination logic operable to determine that there is a primary carrier radio link failure warning message to be sent between said user equipment and said base station at a transmission time after receipt of said initial indication; and

power evaluation logic operable to evaluate, based on said initial indication, an appropriate power setting to enable said primary carrier radio link failure warning message to be transmitted between said user equipment (50) and said base station (20) on said primary carrier at said transmission time.

**13.** A computer program product operable, when executed on a computer, to perform the method steps of any one of claims 1 to 11.

**Patentansprüche**

**1.** Verfahren zur Evaluierung der Übertragungsleistung für die Übertragung einer Wammeldung für den Ausfall einer Primärträger-Funkverbindung zwischen einem Benutzerendgerät (50) und einer Basisstation (20) in einem drahtlosen Mehrträger-Kommunikationssystem (10), in welchem ein vorbestimmter Satz einer Vielzahl von Trägern verwendet wird, um die Kommunikation zwischen der besagten Basisstation (20) und dem besagten Benutzerendgerät (50) zu unterstützen, wobei der besagte vorbestimmte Satz der besagten Vielzahl von Trägern einen Primärträger und mindestens einen Sekundärträger umfasst, wobei das besagte Verfahren die folgenden Schritte umfasst:

Bestimmen einer anfänglichen Angabe einer entsprechenden Leistungseinstellung, um das Übertragen einer Nachricht zwischen dem besagten Benutzerendgerät (50) und der besagten Basisstation (20) auf dem besagten Primärträger zu ermöglichen, durch Bestimmen einer anfänglichen Übertragungsleistung des Benutzerendgeräts, wobei diese anfängliche Übertragungsleistung anhand einer zwischen der besagten Basisstation und dem besagten Benutzerendgerät (50) gesendeten Rückkopplungsschleifenleistungssteuerungsnachricht festgelegt wurde;

Bestimmen, dass eine Warnmeldung für den Ausfall einer Primärträger-Funkverbindung zwischen dem besagten Benutzerendgerät (50) und der besagten Basisstation (20) zu einem Übertragungszeitpunkt nach Empfang der besagten anfänglichen Angabe zu senden ist;

Evaluieren, auf Basis der besagten anfänglichen Angabe, einer entsprechenden Leistungseinstellung, um die Übertragung der besagten Warnmeldung für den Ausfall einer Primärträger-Funkverbindung zwischen dem besagten Benutzerendgerät (50) und der besagten Basisstation (20) auf dem besagten Primärträger zu dem besagten Übertragungszeitpunkt zu ermöglichen.

**2.** Verfahren nach Anspruch 1, wobei der besagte Schritt des Evaluierens das Festlegen der Übertragungsleistung für die Übertragung einer Nachricht zwischen dem Benutzerendgerät (50) und der Basisstation (20) auf einen im Wesentlichen maximal verfügbaren Pegel umfasst

**3.** Verfahren nach einem beliebigen der vorstehenden Ansprüche, wobei der besagte Schritt des Evaluierens weiterhin den Schritt des Schätzens einer wahrscheinlichen Änderung des Pfadverlustes zwischen dem besagten Benutzerendgerät und der besagten Basisstation, welche zwischen dem Empfang der besagten anfänglichen Angabe und dem besagten Übertragungszeitpunkt aufgetreten ist, umfasst.

**4.** Verfahren nach Anspruch 3, wobei die besagte Schätzung des Pfadverlustes auf dem Pfadverlust, der von einem Pilotkanal auf einem zwischen der besagten Basisstation (20) und dem Benutzerendgerät (50) berechnet wurde, basiert.

**5.** Verfahren nach einem beliebigen der vorstehenden Ansprüche, wobei der besagte Schritt des Bewertens einer wahrscheinlichen Änderung des Fadings zwischen der besagten Basisstation (20) und dem besagten Benutzerendgerät (50), welche zwischen dem Empfang der besagten anfänglichen Angabe und dem besagten Übertragungszeitpunkt aufgetreten ist, umfasst.

**6.** Verfahren nach Anspruch 5, wobei der besagten wahrscheinlichen Änderung des Fadings ein vorbestimmter Mittelwert zugeordnet wird.

**7.** Verfahren nach einem beliebigen der vorstehenden Ansprüche, weiterhin umfassend den Schritt des Berechnens einer Zeitspanne zwischen dem besagten Empfang der besagten anfänglichen Angabe und dem besagten Übertragungszeitpunkt und des Ermittelns, ob diese Zeitspanne eine vorbestimmte feste Zeitspanne überschreitet.

**8.** Verfahren nach Anspruch 7, wobei, wenn ermittelt wird, dass die besagte Zeitspanne die besagte vorbestimmte Zeitspanne überschreitet, der besagte Schritt des Evaluierens weiterhin den Schritt des Schätzens einer zu überwindenden Interferenz, um die Übertragung einer Nachricht zwischen dem besagten Benutzerendgerät (50) und der Basisstation (20) auf dem besagten Primärträger zu dem besagten Übertragungszeitpunkt zu ermöglichen, umfasst.

9. Verfahren nach Anspruch 8, wobei der besagte Schritt des Schätzens der Interferenz den Schritt des Empfangens einer Angabe der zu überwindenden Interferenz, um die Übertragung einer Nachricht zwischen dem besagten Benutzerendgerät (50) und der besagten Basisstation (20) auf dem besagten Primärträger zu dem besagten Übertragungszeitpunkt zu ermöglichen, umfasst.

10. Verfahren nach einem beliebigen der vorstehenden Ansprüche, weiterhin umfassend den Schritt des Übertragens der besagten Warnmeldung für den Ausfall einer Primärträger-Funkverbindung bei der besagten entsprechenden Leistungseinstellung zu dem besagten Übertragungszeitpunkt, und das anschließende Wiederholen der Übertragung der besagten Warnmeldung für den Ausfall einer Primärträger-Funkverbindung zu einer vorbestimmten Zeit nach dem besagten Übertragungszeitpunkt.

11. Verfahren nach einem beliebigen der vorstehenden Ansprüche, weiterhin umfassend den Schritt des Prüfens, ob ein unabhängig leistungsgesteuerter Sekundärträger verfügbar ist, und bei Verfügbarkeit Senden der besagten zwischen dem besagten Benutzerendgerät (50) und der besagten Basisstation (20) zu übertragenden Warnmeldung für den Ausfall einer Primärträger-Funkverbindung auf dem besagten verfügbaren Sekundärträger zu dem besagten Übertragungszeitpunkt.

12. Benutzerendgerät (50), betreibbar für das Evaluieren der Übertragungsleistung für die Übertragung einer Warnmeldung für den Ausfall einer Primärträger-Funkverbindung an eine Basisstation (20) in einem drahtlosen Mehrträger-Kommunikationssystem, wobei ein vorbestimmter Satz einer Vielzahl von Trägern für die Unterstützung der Kommunikation zwischen dem besagten Benutzerendgerät (50) und der besagten Basisstation (20) benutzt wird, wobei der besagte vorbestimmte Satz der besagten Vielzahl von Trägern einen Primärträger und mindestens einen Sekundärträger umfasst, wobei das besagte Benutzerendgerät umfasst:

Leistungsbestimmungslogik, betreibbar für das Bestimmen einer anfänglichen Angabe einer entsprechenden Leistungseinstellung, um die Übertragung einer Nachricht zwischen dem besagten Benutzerendgerät (50) und der besagten Basisstation (20) auf dem besagten Primärträger (50) zu ermöglichen, durch Bestimmen einer anfänglichen Übertragungsleistung des Benutzerendgeräts, wobei diese anfängliche Übertragungsleistung anhand einer zwischen der besagten Basisstation und dem besagten Benutzerendgerät gesendeten Rückkopplungsschleifenleistungssteuerungsnachricht festgelegt wurde;
Nachrichtenermittlungslogik, betreibbar, um zu bestimmen, dass eine Warnmeldung für den Ausfall einer Primärträger-Funkverbindung zu einem Übertragungszeitpunkt nach Empfang der besagten anfänglichen Angabe zwischen dem besagten Benutzerendgerät und der besagten Basisstation zu senden ist; und
Leistungsbewertungslogik, betreibbar, um auf der Basis der besagten anfänglichen Angabe eine entsprechende Leistungseinstellung zu evaluieren, um das Übertragen der Warnmeldung für den Ausfall einer Primärträger-Funkverbindung zwischen dem besagten Benutzerendgerät (50) und der besagten Basisstation (20) auf dem besagten Primärträger zu dem besagten Übertragungszeitpunkt zu ermöglichen.

13. Computerprogramm-Produkt, betreibbar, um bei dessen Ausführung auf einem Computer die Verfahrensschritte gemäß einem beliebigen der Ansprüche 1 bis 11 durchzuführen.

**Revendications**

1. Procédé d'évaluation de la puissance d'émission pour l'émission d'un message d'avertissement de défaillance de liaison radioélectrique de porteuse primaire entre un équipement d'utilisateur (50) et une station de base (20) dans un système de communications sans fil à porteuses multiples (10) dans lequel un ensemble prédéterminé d'une pluralité de porteuses est utilisé pour prendre en charge la communication entre ladite station de base (20) et ledit équipement d'utilisateur (50), ledit ensemble prédéterminé de ladite pluralité de porteuses comprenant une porteuse primaire et au moins une porteuse secondaire, ledit procédé comprenant les étapes suivantes :

détermination d'une indication initiale du réglage approprié de la puissance pour permettre l'émission d'un message entre ledit équipement d'utilisateur (50) et la station de base (20) sur ladite porteuse primaire en déterminant une puissance d'émission initiale de l'équipement d'utilisateur, cette puissance d'émission initiale ayant été réglée par un message de régulation de puissance à boucle de contre-réaction envoyé entre ladite station de base et l'équipement d'utilisateur (50) ;

détermination de la présence d'un message d'avertissement de défaillance de liaison radioélectrique de porteuse primaire à envoyer entre ledit équipement d'utilisateur (50) et la station de base (20) à un moment d'émission après la réception de ladite indication initiale :

évaluation, en se basant sur ladite indication initiale, d'un réglage approprié de la puissance pour permettre audit message d'avertissement de défaillance de liaison radioélectrique de porteuse primaire d'être émis entre ledit équipement d'utilisateur (50) et la station de base (20) sur ladite porteuse primaire audit moment d'émission.

2. Procédé selon la revendication 1, selon lequel ladite première étape d'évaluation comprend le réglage de la puissance d'émission pour l'émission d'un message entre l'équipement utilisateur (50) et la station de base (20) à un niveau sensiblement maximum disponible.

3. Procédé selon l'une quelconque des revendications précédentes, selon lequel ladite étape d'évaluation comprend en outre l'étape d'estimation d'un changement probable de l'affaiblissement de trajet entre ledit équipement d'utilisateur et la station de base qui s'est produit entre la réception de ladite indication initiale et ledit moment d'émission.

4. Procédé selon la revendication 3, selon lequel ladite estimation de l'affaiblïssement de trajet se base sur un affaiblissement de trajet calculé à partir d'une porteuse pilote sur une porteuse émise entre ladite station de base (20) et l'équipement d'utilisateur (50).

5. Procédé selon l'une quelconque des revendications précédentes, selon lequel ladite étape d'évaluation comprend en outre l'étape d'estimation d'un changement probable de l'évanouissement entre ladite station de base (20) et l'équipement d'utilisateur (50) qui s'est produit entre la réception de ladite indication initiale et ledit moment d'émission.

6. Procédé selon la revendication 5, selon lequel une valeur moyenne prédéterminée est affectée audit changement probable de l'évanouissement.

7. Procédé selon l'une quelconque des revendications précédentes, comprenant en outre l'étape de calcul d'une période entre ladite réception de ladite indication initiale et ledit moment d'émission et de détermination si cette période dépasse une période stable prédéterminée.

8. Procédé selon la revendication 7, selon lequel s'il est déterminé que ladite période est supérieure à ladite période prédéterminée, ladite étape d'évaluation comprend en outre l'étape d'estimation des interférences à surmonter pour permettre l'émission d'un message entre ledit équipement d'utilisateur (50) et la station de base (20) sur ladite porteuse primaire audit moment d'émission.

9. Procédé selon la revendication 8, selon lequel ladite étape d'estimation des interférences comprend l'étape de réception d'une indication des interférences à surmonter pour permettre l'émission d'un message entre ledit équipement d'utilisateur (50) et la station de base (20) sur ladite porteuse primaire audit moment d'émission.

10. Procédé selon l'une quelconque des revendications précédentes, comprenant en outre l'étape d'émission dudit message d'avertissement de défaillance de liaison radioélectrique de porteuse primaire audit réglage de puissance approprié audit moment d'émission, et ensuite répétition de l'émission dudit message d'avertissement de défaillance de liaison radioélectrique de porteuse primaire à une période prédéterminée après ledit moment d'émission.

11. Procédé selon l'une quelconque des revendications précédentes, comprenant en outre l'étape de contrôle si une porteuse secondaire à la puissance régulée indépendamment est disponible et, si elle est disponible, envoi dudit message d'avertissement de défaillance de liaison radioélectrique de porteuse primaire à émettre entre ledit équipement d'utilisateur (50) et ladite station de base (20) sur ladite porteuse secondaire disponible audit moment d'émission.

12. Équipement d'utilisateur (50) utilisable pour évaluer la puissance d'émission pour l'émission d'un message d'avertissement de défaillance de liaison radioélectrique de porteuse primaire vers une station de base (20) dans un système de communications sans fil à porteuses multiples dans lequel un ensemble prédéterminé d'une pluralité de porteuses est utilisé pour prendre en charge la communication entre ledit équipement d'utilisateur (50) et ladite station de base (20), ledit ensemble prédéterminé de ladite pluralité de porteuses comprenant une porteuse primaire et au moins une porteuse secondaire, ledit équipement d'utilisateur comprenant :

une logique de détermination de puissance utilisable pour déterminer une indication initiale du réglage approprié de la puissance pour permettre l'émission d'un message entre ledit équipement d'utilisateur (50) et ladite station de base (20) sur ladite porteuse primaire en déterminant une puissance d'émission initiale de l'équipement d'utilisateur (50), cette puissance d'émission initiale ayant été réglée par un message de régulation de puissance à boucle de contre-réaction envoyé entre ladite station de base et ledit équipement d'utilisateur ;
une logique de détermination de message utilisable pour déterminer la présence d'un message d'avertissement de défaillance de liaison radioélectrique de porteuse primaire à envoyer entre ledit équipement d'utilisateur et ladite station de base à un moment d'émission après la réception de ladite indication initiale ; et
une logique d'évaluation de puissance utilisable pour évaluer, en se basant sur ladite indication initiale, un réglage approprié de la puissance pour permettre audit message d'avertissement de défaillance de liaison radioélectrique de porteuse primaire d'être émis entre ledit équipement d'utilisateur (50) et ladite station de base (20) sur ladite porteuse primaire audit moment d'émission.

**13.** Produit de programme informatique utilisable, lorsqu'il est exécuté dans un ordinateur, pour exécuter les étapes du procédé selon l'une quelconque des revendications 1 à 11.

Traditional UMTS Architecture

FIG. 1

RRC

Declare Radio
Link Failure    S60

YES

T313
Expires    S50

S30

T313
Started    NO    Start    Timer
T313    Stop &
Reset

YES    YES

S20    S40

Number of consecutive
CPHY-Out-of-Sync-IND > N313    Number of consecutive
CPHY-Sync-IND > N315

CPHY-Out-of-Sync-IND    NO    Layer 1 in
sync    YES    CPHY-Sync-IND

Physical Layer    S10

START
(at every clock cycle)

FIGURE 2

EP 2 418 896 B1

**RRC**

**Physical Layer**

FIGURE 3

EP 2 418 896 B1

**FIGURE 4**

**FIGURE 5**

Start

Active 2nd UL carrier — S1

Yes → Transmit RLF Warning on best 2nd UL carrier — S2

No → Delay > $T_{DELAY}$ — S4

No → Transmit RLF Warning with PTX derived from Equation 5 — S5

Yes → Read SIB7 to get $I_{NB}$ — S6

Transmit RLF Warning with Max Power — S10

Transmit RLF Warning with PTX derived from Equation 6

Retransmit RLF Warning using same method — S3

**FIGURE 6**

F1, F2

NB1

F1, F2, F3, F4

NB2

S0

**FIGURE 7**

**EP 2 418 896 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010051520 A
- WO 2010088329 A